# FASCICULE DE BREVET EUROPEEN

(11) **EP 1 626 192 B1**
(45) Date de publication et mention de la délivrance du brevet: **10.10.2007**
(21) Numéro de dépôt: 05015279.2
(22) Date de dépôt: 14.07.2005
(51) Int. Cl.: F16D 55/2265

(54) **Frein a disque pour vehicule automobile**
Scheibenbremse für ein Fahrzeug
Disc brake for a vehicle

(30) Priorité: 09.08.2004 FR 0408784
(43) Date de publication de la demande: 15.02.2006
(73) Titulaire: ROBERT BOSCH GMBH, 70442 Stuttgart (DE)
(72) Inventeur: Boisseau, Jean-Pierre, 75014 Paris (FR)
(74) Mandataire: Hurwic, Aleksander Wiktor

(56) Documents cités:
- DE-A1- 3 929 748
- DE-A1- 4 024 484
- US-A- 4 276 965
- US-A- 4 901 825

## Description

L'invention concerne un frein à disque pour véhicule et notamment un système de montage d'étrier de frein à disque.

US-A-4901 825 décrit un frein à disque muni d'un ressort en fil, comportant une partie centrale et de part et d'autre de la partie centrale, des prolongements placés dans des logements pratiqués dans la chape.

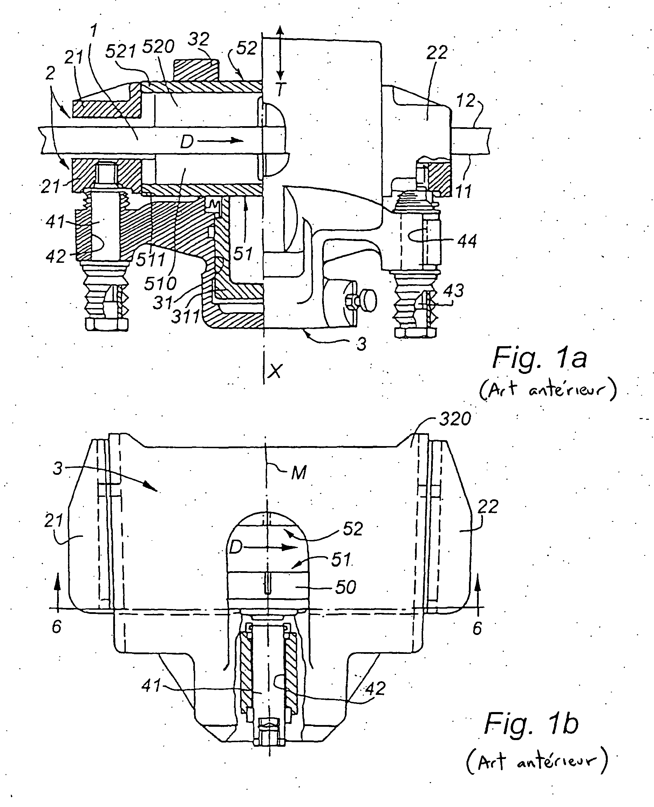

Un frein à disque, tel que représenté en figures 1a et 1b, est destiné à être placé de part et d'autre d'un disque 1 présentant une face plane interne 11 et une face plane externe 12. Ce disque est solidaire en rotation d'un essieu de roue du véhicule et, lors d'un freinage, le frein à disque doit venir enserrer les deux faces du disque. Un tel frein à disque comporte, de façon générale, Une chape 2 comprenant une branche amont 22 (selon un sens de rotation du disque) et une branche aval 21 est destinée à chevaucher le disque et est fixée au véhicule du côté de la face interne 11 du disque. Chaque branche de la chape comporte un logement interne et un logement externe situés de part et d'autre du disque. Ces logements sont destinés à recevoir des extrémités d'un support de plaquettes de freins interne 51 et d'un support de plaquette de frein externe 52 situés de part et d'autre du disque et portant des plaquettes de frein 510 et 520. Ces supports de plaquettes de frein coulissent dans les logements de la chape.

Un étrier 3 est destiné à chevaucher le disque et est monté mobile par rapport à la chape et au disque selon une direction perpendiculaire au plan du disque. Cet étrier comporte une mâchoire 32 tournée vers la face externe du disque et qui est destinée à exercer un effort de freinage sur le support de plaquette de frein externe 52 selon une direction perpendiculaire au plan du disque. L'étrier comporte un cylindre 31 dans lequel coulisse un piston 311 qui a pour fonction d'exercer un effort de freinage sur le support de plaquette de frein interne 51.

Des moyens de guidage 41, 42 prévus sur la chape et sur l'étrier permettent de faire coulisser l'étrier par rapport à la chape.

La figure 1a représente un frein à disque comportant deux colonnettes et la figure 1b représente un frein à disque ne comportant q'une seule colonnette.

Ainsi, lors d'une commande de freinage, le piston du cylindre de frein appuiera sur le support de plaquette de frein interne, puis l'étrier se déplacera par rapport à la chape et exercera par la mâchoire externe 32 un effort de freinage sur le support de plaquette de frein externe 52.

Ces types de freins sont bien connus dans la technique et s'appelle généralement freins à étrier flottant. On trouvera des descriptions plus détaillées de ces freins dans les documents PCT/FR/9600615 ou EP/0694133 par exemple.

Les moyens de guidage de l'étrier sur la chape comportent généralement deux colonnettes fixées à la chape et sur lesquelles coulisse l'étrier. On connaît également un frein à disque ne comportant qu'une seule colonnette tel que cela est décrit dans le brevet français FR/2776352 et représenté en figure 1b. Comme cela est expliqué dans ce document, il se pose des problèmes de guidage de l'étrier dus au fait que l'étrier est monté en porte à faux par rapport aux moyens de guidage sur la chape et que lors des freinages, l'étrier est soumis à des forces d'entraînement dans le sens de rotation du disque.

L'invention a pour objet un système de maintien de l'étrier permettant de simplifier le guidage de l'étrier et donc d'en simplifier la fabrication. Elle est applicable de préférence mais non exclusivement à un frein à une seule colonnette tel que celui représenté en figure 1b.

La présente invention a principalement pour objet un frein à disque pour véhicule comprenant:
- une chape comprenant une branche amont et une branche aval destinées à chevaucher un disque de freinage et qui sont solidaires d'une base commune fixée au véhicule, chaque branche possédant un logement interne et un logement externe situées en vis à vis,
- deux supports de plaquettes de frein interne et externe et leurs plaquettes de frein, lesdits supports étant montés coulissants dans lesdits logements interne et externe,
- un étrier destiné à chevaucher le disque et dont une partie interne est montée coulissante par rapport à la chape selon une direction perpendiculaire au plan des plaquettes de frein à l'aide d'au moins un dispositif de guidage, ledit étrier comportant un premier élément de pression appartenant à une partie externe de l'étrier et tourné vers le support de plaquette de frein externe pour s'appuyer sur celui-ci ainsi qu'un deuxième élément de pression (cylindre 31) appartenant à la partie interne de l'étrier et tourné vers le support de plaquette de frein interne pour s'appuyer sur celui-ci,comportant un système de ressort supportant la partie externe de l'étrier par rapport à la chape,ledit frein étant destiné à être situé dans une zone haute du disque de freinage et en ce que ledit ressort comporte une partie centrale qui est placé dans au moins une gorge prévue dans une face inférieure de la partie externe de l'étrier et qui prend appui sur la chape (2) caractérisé en ce que le ressort comporte, de part et d'autre de la partie centrale, des prolongements en forme de boucle qui sont placées dans lesdits logements de la chape et qui épousent sensiblement la forme intérieur des logements.

La présente invention a également pour objet un frein à disque, caractérisé en ce que les prolongements en forme de boucles sont terminés par des extrémités qui sont placées dans des trous de l'étrier

La présente invention a également pour objet un frein à disque, caractérisé en ce que les prolongements en forme de boucles sont situés sensiblement selon un premier plan et en ce que lesdites extrémités et la partie centrale du ressort sont situées sensiblement selon un deuxième plan.

La présente invention a également pour objet un frein à disque, caractérisé en ce que lesdits plans sont sensiblement parallèles au plan des plaquettes de frein et en ce que le premier plan est situé entre le disque et le deuxième plan.

La présente invention a également pour objet un frein à disque, caractérisé en ce que lesdits logements comportent des ressorts à lames prévus pour recevoir les extrémités des support de plaquettes de frein, et en ce que les prolongements en forme de boucles sont placés dans ces ressorts à lames.

Les différents aspects et caractéristiques de l'invention apparaîtront plus clairement dans la description qui va suivre et dans les figures annexées qui représentent :
- les figures 1a et 1b, des systèmes de frein à disque connus dans la technique et décrit précédemment,
- la figure 2, un exemple de réalisation du système de frein à disque selon l'invention,
- les figures 3a et 3b, des exemples de réalisation de détails du système selon l'invention,
- les figures 3c et 3d, un mode de montage/démontage du système selon l'invention.

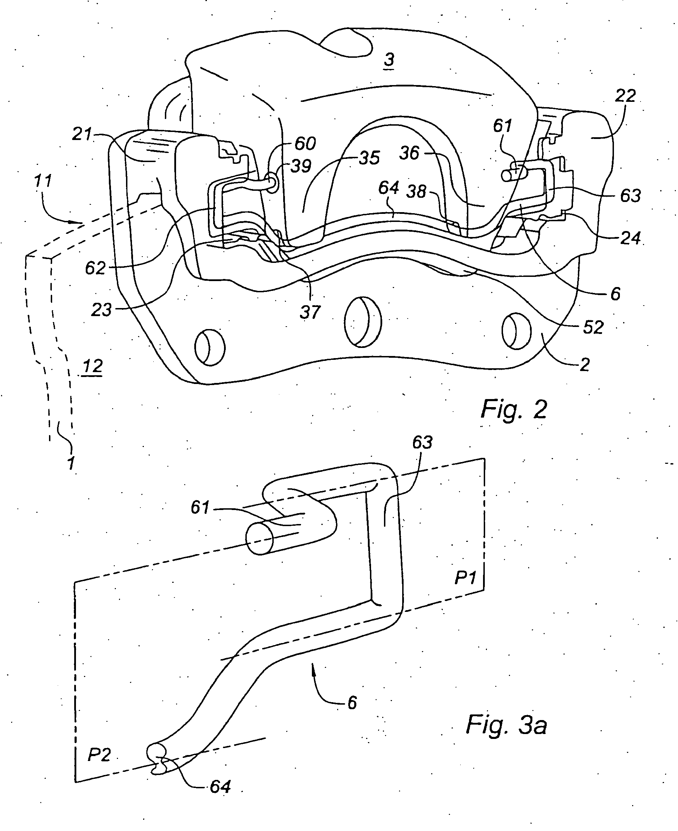

En se reportant à la figure 2, on va donc décrire un exemple de réalisation du système de l'invention.

Comme dans le frein à disque des figures 1a et 1b, le frein à disque de la figure 2 comporte une chape 2 qui est fixée au véhicule. Cette chape comporte une branche amont 21 et une branche aval 22 qui chevauchent le disque de freinage 1 représenté en traits mixtes sur la figure 2. La face 12 du disque visible sur la figure 2 est la face externe du disque c'est-à-dire la face du disque qui est orientée vers l'extérieur du véhicule.

Les branches 21 et 22 comporte des logements 23 et 24 dans lesquels sont montés des supports de plaquettes de frein de chaque côté du disque. Sur la figure 2, on voit le support de plaquette de frein externe 52 qui est monté dans les logements 23 et 24 des parties externes des branches 21 et 22 de la chape. Les supports de plaquettes de frein peuvent se déplacer dans les logements 21 et 22 perpendiculairement au plan du disque 1.

L'étrier 3 chevauche le disque 1 et comporte une partie interne non visible sur la figure 2, et une partie externe 35/36. La partie externe 35/36 comporte deux branches 35 et 36 sur la figure 2. Elle a pour fonction d'appuyer sur le support de plaquette de frein 52 perpendiculairement au plan du disque et la partie interne a pour fonction d'appuyer sur le support de plaquette de frein interne (non visible sur la figure 2).

L'étrier 3 est monté sur la chape de telle façon qu'il soit mobile selon une direction perpendiculaire au plan du disque. Pour cela, comme décrit dans la demande de brevet EP/2776352, l'étrier possède au moins une colonnette qui peut coulisser dans un alésage de la chape. Ce montage colonnette/alésage n'est pas visible sur la figure 2 parce qu'il est situé du côté de la partie interne de l'étrier et de la chape. Dans ces conditions, la partie externe de l'étrier visible sur la figure 2 est guidée en raison du guidage de la partie interne. Cette partie externe de l'étrier se trouve donc être en porte à faux sur l'assemblage colonnette/alésage de la chape. En plus de ce porte à faux, l'étrier supporte des efforts d'entraînement lorsque lors des freinage, les plaquettes de frein entrent en contact avec le disque 1.

L'invention prévoit donc un ressort 6 qui s'appuie dans les logements 23 et 24 de la chape et qui supporte par sa partie inférieur 64 la partie externe 35/36 de l'étrier. De préférence, la partie inférieure 64 du ressort est située sous la face inférieure des branches externes 35 et 36 de l'étrier.

De plus, le ressort 6 possèdent des extrémités en forme de boucles 62 et 63 qui épousent sensiblement la forme des logements 23, 24. Les extrémités libres 60 et 61 des boucles sont prévues pour être logées dans des trous de l'étrier tel que le trou 39 prévu dans la branche 35 de l'étrier.

La partie inférieure 64 du ressort est placé dans des gorges 37 et 38 prévues dans les faces inférieures des branches 35 et 36 de l'étrier.

Ainsi, le ressort 6 forme un tout avec l'étrier lorsqu'il est monté avec sa partie centrale 64 dans les gorges 37 et 38 et avec ses extrémités 60 et 61 dans les trous (tel que 39) de l'étrier. L'ensemble est monté dans la chape avec les extrémités du ressort en forme de boucles 62 et 63 montées dans les logements 23 et 24 où elles peuvent coulisser perpendiculairement au plan du disque.

L'étrier a donc une partie externe 35/36 maintenue par le ressort 6 dans les logements 23, 24 de la chape à un niveau déterminé par rapport à la chape et donc également avec un alignement déterminé de la colonnette dans l'alésage de la chape.

De plus, pour permettre de réduire l'épaisseur de la chape selon la direction perpendiculaire au plan du disque, les éléments qui forment les boucles 62 et 63 du ressort 6 sont situés selon un plan P1 (voir figure 3a), ce qui permet aux boucles 62 et 63 d'être dans les logements 23 et 24 de la chape respectivement. Par contre les extrémités 60, 61 et la partie centrale 64 du ressort sont situées selon un autre plan P2, de préférence parallèle au plan P1, ce qui permet à ces éléments du ressort d'être placés respectivement dans les trous 39 et dans les gorges 37, 38 de l'étrier. L'étrier 3 peut donc ressortir vers l'extérieur du véhicule par rapport à la face externe de la chape.

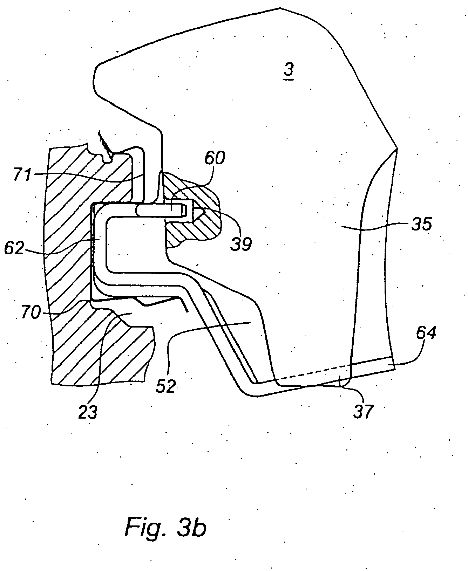

La figure 3b montre un détail de montage d'une extrémité du ressort 6 dans la chape 2.

En arrière plan du ressort 6 et de l'étrier 3 est dessiné le support de plaquette de frein 52. De manière connue en soi, les extrémités des supports de plaquettes de frein sont montées dans les logements de la chape avec des ressorts interposés entre ces extrémités et les logements. Sur la figure 3b, on voit donc une extrémité d'un support de plaquette de frein 52 placé dans un ressort à lame 70, lequel est placé dans le logement 23 de la chape (figure 2). Un dispositif à ressort 71 permet de maintenir le ressort 70 dans le logement 23.

L'extrémité en boucle 62 du ressort 6 est placé dans ce même ressort 70 qui maintien le support de plaquette de frein 52.

On voit donc que le système de l'invention permet de diminuer le nombre de pièces de montage de l'étrier et de résoudre les problèmes d'alignement et de guidage de l'étrier et de sa colonnette de montage avec l'alésage de la chape dans lequel coulisse la colonnette. En effet, l'ensemble étrier 3/ressort 6 est maintenu verticalement et latéralement en coulissement dans les logements 23 et 24.

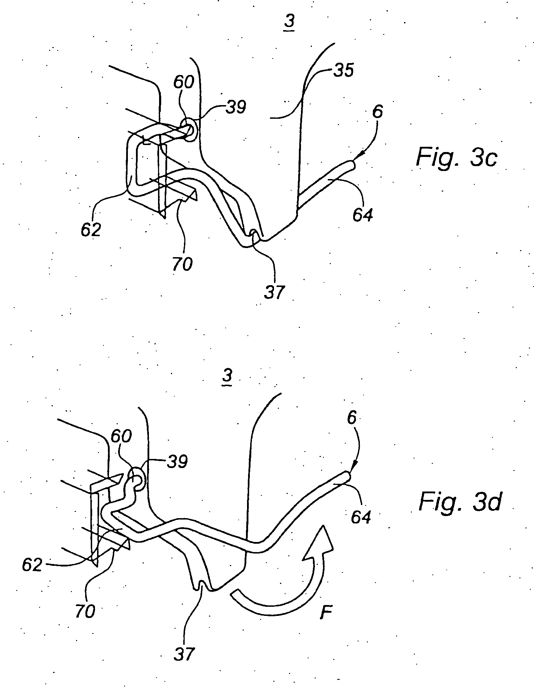

Les figures 3c et 3d montrent une opération de démontage du système selon l'invention. A partir d'une position montée (figure 3c), en tirant sur la partie 64 du ressort6, on déboîte cette partie 64 des gorges telle que 37 de l'étrier. L'étrier est alors quasiment libéré.

Bien entendu, le montage se fait selon une opération inverse.

## Revendications

1. Frein à disque pour véhicule comprenant:
- une chape (2) comprenant une branche amont (21) et une branche aval (22) destinées à chevaucher un disque de freinage et qui sont solidaires d'une base commune fixée au véhicule, chaque branche possédant un logement interne et un logement externe (23, 24) situées en vis à vis,
- deux supports de plaquettes de frein interne (51) et externe (52) et leurs plaquettes de frein, lesdits supports étant montés coulissants dans lesdits logements interne et externe (23, 24),
- un étrier (3) destiné à chevaucher le disque et dont une partie interne est montée coulissante par rapport à la chape selon une direction perpendiculaire au plan des plaquettes de frein à l'aide d'au moins un dispositif de guidage (41, 42), ledit étrier comportant un premier élément de pression (32) appartenant à une partie externe (35, 36) de l'étrier et tourné vers le support de plaquette de frein externe (52) pour s'appuyer sur celui-ci ainsi qu'un deuxième élément de pression (31) appartenant à la partie interne de l'étrier et tourné vers le support de plaquette de frein interne (51) pour s'appuyer sur celui-ci,comportant un système de ressort (6) supportant la partie externe de l'étrier par rapport à la chape (2),ledit frein étant destiné à être situé dans une zone haute du disque de freinage et en ce que ledit ressort comporte une partie centrale (64) qui est placé dans au moins une gorge (37, 38) prévue dans une face inférieure de la partie externe (35, 36) de l'étrier et qui prend appui sur la chape (2) **caractérisé en ce que** le ressort (6) comporte, de part et d'autre de la partie centrale (64), des prolongements en forme de boucle (62, 63) qui sont placées dans lesdits logements de la chape et qui épousent sensiblement la forme intérieur des logements interne et externe (23, 24).

2. Frein à disque selon la revendication 1, **caractérisé en ce que** les prolongements en forme de boucles (62, 63) sont terminés par des extrémités (60, 61) qui sont placées dans des trous (39) de l'étrier (3)

3. Frein à disque selon la revendication 2, **caractérisé en ce que** les prolongements (62, 63) en forme de boucles sont situés sensiblement selon un premier plan (P1) et **en ce que** lesdites extrémités (60, 61) et la partie centrale (64) du ressort (6) sont situées sensiblement selon un deuxième plan (P2).

4. Frein à disque selon la revendication 3, **caractérisé en ce que** lesdits plans (P1, P2) sont sensiblement parallèles au plan des plaquettes de frein et **en ce que** le premier plan (P1) est situé entre le disque et le deuxième plan (P2).

5. Frein à disque selon la revendication 1, **caractérisé en ce que** lesdits logements (23, 24) comportent des ressort (70) à lames prévus pour recevoir les extrémités des support de plaquettes de frein, et **en ce que** les prolongements (62, 63) en forme de boucles sont placés dans ces ressorts à lames.

## Claims

1. Disc brake for a vehicle, comprising:
- a carrier (2) comprising an upstream branch (21) and a downstream branch (22) which are intended to straddle a brake disc and which are secured to a common base that is fixed to the vehicle, each branch having an inboard housing and an outboard housing (23, 24) which lie facing one another,
- two brake pad backing plates, an inboard one (51) and an outboard one (52) and their brake pads, the said backing plates being slideably mounted in said inboard and outboard housings (23, 24),
- a caliper (3) intended to straddle the disc and an internal part of which is mounted to slide with respect to the carrier in a direction perpendicular to the plane of the brake pads via at least one guide device (41, 42), the said caliper comprising a first pressing element (32) belonging to an outboard part (35, 36) of the caliper and facing towards the outboard brake pad backing plate (52) so as to press against the latter, and a second pressing element (31) belonging to the inboard part of the caliper and facing towards the inboard brake pad backing plate (51) so as to press against the latter, comprising a spring system (6) supporting the outboard part of the caliper with respect to the carrier (2), the said brake being intended to be positioned in an upper region of the brake disc, and the said spring comprises a central part (64) which is placed in at least one groove (37, 38) provided in an underside of the outboard part (35, 36) of the caliper and which bears against the carrier (2), **characterized in that** the spring (6) comprises, on each side of the central part (64), loop-form extensions (62, 63) which are placed in the said housings of the carrier and which more or less hug the interior shape of the inboard and outboard housings (23, 2'4).

2. Disc brake according to Claim 1, **characterized in that** the loop-form extensions (62, 63) end in extremities (60, 61) which are placed in holes (39) in the caliper (3).

3. Disc brake according to Claim 2, **characterized in that** the loop-form extensions (62, 63) are positioned more or less in a first plane (P1) and **in that** the said extremities (60, 61) and the central part (64) of the spring (62) are positioned more or less in a second plane (P2).

4. Disc brake according to Claim 3, **characterized in that** the said planes (P1, P2) are more or less parallel to the plane of the brake pads and **in that** the first plane (P1) lies between the disc and the second plane (P2).

5. Disc brake according to Claim 1, **characterized in that** the said housings (23, 24) comprise leaf springs (90) designed to accept the extremities of the brake pad backing plates, and **in that** the loop-form extensions (62, 63) are positioned in these leaf springs.

## Patentansprüche

1. Scheibenbremse für ein Fahrzeug, mit:
- einem Halter (2), der einen vorderen Schenkel (21) und einen hinteren Schenkel (22) aufweist, die eine Bremsscheibe umgreifen sollen und mit einer gemeinsamen, am Fahrzeug befestigten Basis fest verbunden sind, wobei jeder Schenkel eine innere Aufnahme und eine äußere Aufnahme (23, 24) aufweist, die einander gegenüberliegen,
- einem inneren Bremsklotzträger (51) und einem äußeren Bremsklotzträger (52) und ihren Bremsklötzen, wobei die Träger in der inneren und äußeren Aufnahme (23, 24) gleitend angebracht sind,
- einem Bremssattel (3), der die Scheibe umgreifen soll und bei dem ein Innenabschnitt so angebracht ist, dass er mittels mindestens einer Führungsvorrichtung (41, 42) bezüglich des Halters senkrecht zur Ebene der Bremsklötze gleiten kann, wobei der Bremssattel ein erstes Andrückelement (32) aufweist, das zu einem Außenabschnitt (35, 36) des Bremssattels gehört und zum äußeren Bremsklotzträger (52) gerichtet ist, um auf diesen gedrückt zu werden, sowie ein zweites Andrückelement (31), das zum Innenabschnitt des Bremssattels gehört und zum inneren Bremsklotzträger (51) gerichtet ist, um auf diesen gedrückt zu werden, wobei er ein Federsystem (6) aufweist, das den Außenabschnitt des Bremssattels bezüglich des Halters (2) trägt, wobei die Bremse dafür vorgesehen ist, in einem oberen Bereich der Bremsscheibe angeordnet zu werden, und die Feder einen Mittelabschnitt (64) aufweist, der in mindestens einer Nut (37, 38), die in einer unteren Fläche des Außenabschnitts (35, 36) des Bremssattels vorgesehen ist, angeordnet ist und sich am Halter (2) abstützt, **dadurch gekennzeichnet, dass** die Feder (6) auf der einen und auf der anderen Seite des Mittelabschnitts (64) schlaufenförmigen Fortsätze (62, 63) aufweist, die in den Aufnahmen des Halters angeordnet sind und sich im Wesentlichen an die Innenform der inneren und äußeren Aufnahme (23, 24) anpassen.

2. Scheibenbremse nach Anspruch 1, **dadurch gekennzeichnet, dass** die schlaufenförmigen Fortsätze (62, 63) in Enden (60, 61) münden, die in Löchern (39) des Bremssattels (3) angeordnet sind.

3. Bremsscheibe nach Anspruch 2, **dadurch gekennzeichnet, dass** die schlaufenförmigen Fortsätze (62, 63) im Wesentlichen gemäß einer ersten Ebene (P1) angeordnet sind und die Enden (60, 61) und der Mittelabschnitt (64) der Feder (6) im Wesentlichen gemäß einer zweiten Ebene (P2) angeordnet sind.

4. Scheibenbremse nach Anspruch 3, **dadurch gekennzeichnet, dass** die Ebenen (P1, P2) im Wesentlichen parallel zur Ebene der Bremsklötze verlaufen und die erste Ebene (P1) zwischen der Scheibe und der zweiten Ebene (P2) liegt.

5. Scheibenbremse nach Anspruch 1, **dadurch gekennzeichnet, dass** die Aufnahmen (23, 24) Blattfedern (70) aufweisen, die zur Aufnahme der Enden der Bremsklotzträger vorgesehen sind, und dass die schlaufenförmigen Fortsätze (62, 63) in diesen Blattfedern angeordnet sind.
